## Europäisches Patentamt

## European Patent Office

## Office européen des brevets

(19)

(11) Veröffentlichungsnummer: **0 059 247**
**B1**

(12) **EUROPÄISCHE PATENTSCHRIFT**

(45) Veröffentlichungstag der Patentschrift:
08.01.86

(51) Int. Cl.⁴: **G 02 F 1/133,** G 09 F 9/35

(21) Anmeldenummer: **81108862.4**

(22) Anmeldetag: **24.10.81**

(54) **Anzeigevorrichtung.**

(30) Priorität: **27.02.81 DE 3107456**

(43) Veröffentlichungstag der Anmeldung:
**08.09.82 Patentblatt 82/36**

(45) Bekanntmachung des Hinweises auf die Patenterteilung:
**08.01.86 Patentblatt 86/2**

(84) Benannte Vertragsstaaten:
**CH DE FR GB LI**

(56) Entgegenhaltungen:
**EP - A - 0 009 243**
**AT - B - 349 545**
**DE - A - 2 849 402**
**DE - A - 2 931 113**
**DE - B - 2 815 405**
**US - A - 3 912 365**

(73) Patentinhaber: **VDO Adolf Schindling AG,**
**Gräfstrasse 103, D-6000 Frankfurt/Main (DE)**

(72) Erfinder: **Nickol, Friedrich-Wilhelm, Am Honigbaum 35,**
**D-6239 Eppstein (DE)**
Erfinder: **Perthes, Harald, Hauptstrasse 131,**
**D-6231 Sulzbach/Ts. (DE)**

(74) Vertreter: **Könekamp, Herbert, Dipl.-Ing., Sodener**
**Strasse 9, D-6231 Schwalbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Anzeigevorrichtung zur Darstellung heller Zeichen in dunklem Umfeld, insbesondere Flüssigkristallanzeige, mit einem zwischen zwei optisch verschiedenen Zuständen schaltbaren Medium zwischen zwei parallelen Trägerplatten, wobei wenigstens eine Trägerplatte ein ein Zeichen bildendes Elektrodensegment trägt, mit einer auf einer der einander zugewandten Trägerplattenflächen aufgebrachten, diese Trägerplattenfläche vollständig überziehenden Fixierschicht, die Distanzelemente beinhaltet, durch die die Trägerplatten in einem bestimmten Abstand voneinander gehalten sind und mit je einem jeder Trägerplatte zugeordneten Polarisator.

Bei einer derartigen Anzeigevorrichtung (DE-B-2 815 504) ist es bekannt, die Distanzelemente aus einem lichtundurchlässigen Material auszubilden. Dies hat den Nachteil, dass das in die Anzeigevorrichtung einfallende Licht sowohl in als auch an der Aussenfläche der Distanzelemente reflektiert werden und Streulicht bilden kann, welches das dunkle Umfeld der hell erscheinenden Zeichen aufhellt.

Dieser das Zeichen umgebende Lichthof führt zu einer Kontrastminderung der Konturen des Zeichens.

Es ist daher Aufgabe der Erfindung, eine Anzeigevorrichtung nach dem Oberbegriff zu schaffen, die bei exakter Einhaltung des Abstands zwischen den Trägerplatten einen starken Kontrast zwischen den Zeichen und deren Umfeld gewährleistet.

Diese Aufgabe wird erfindungsgemäss dadurch gelöst, dass die Distanzelemente im Bereich des Zeichens aus dunklem Glas bestehen.

Dadurch, dass die Fixierschicht die Trägerplatte vollständig überzieht, wird ein gleichmässiger Abstand der Trägerplatten zueinander über deren gesamter Fläche sichergestellt. Während beim Gegenstand nach dem Stand der Technik das restliche durch die Polarisatoren einfallende Licht von den Distanzelementen gestreut und so das Umfeld der Zeichen erhellt wird, absorbieren die dunklen Distanzelemente beim Erfindungsgegenstand dieses Licht. Auf diese Weise bleibt das Umfeld der Zeichen tief dunkel und bewirkt einen starken Kontrast zwischen sich und den hellen Zeichen. Die Distanzelemente können dabei von einem dunklen blau oder braun oder auch schwarz sein.

Vorzugsweise weisen die Distanzelemente einen grösseren Abstand voneinander auf als ihr Durchmesser beträgt. Vorzugsweise besitzen dabei die Distanzelemente einen Durchmesser < 100 µm und sind mit einer Verteilung von weniger oder gleich ein bis zwei Distanzelementen pro Quadratmillimeter auf der Trägerplatte angeordnet. Dies hat den Vorteil, dass trotz der dunklen Farbe der Distanzelemente nur eine praktisch nicht wahrnehmbare Reduzierung der Helligkeit der Zeichen gegenüber transparenten Distanzelementen erfolgt.

Die Distanzelemente können kugelförmig sein.

Da die Distanzelemente in die Fixierschicht eingebunden sind, sind sie ortsfest und können sich bei z.B. senkrecht stehender Anzeigevorrichtung nicht im unteren Bereich der Anzeigevorrichtung absetzen und damit für einen grossen Teil der Anzeigevorrichtung unwirksam werden.

Beschädigungen, z.B. der Orientierungsschichten, die durch Vibrationen der Anzeige und damit einem Aufschlagen der Distanzelemente auf die Orientierungsschichten hervorgerufen werden, werden durch die Einbindung der Distanzelemente in die Fixierschicht ebenfalls vermieden.

Besitzt die Anzeigevorrichtung eine die Trägerplatte vollständig abdeckende Flächenelektrode, so kann die Flächenelektrode als Fixierschicht für die Distanzelemente dienen.

Desgleichen kann eine auf der Trägerplatte angeordnete Elektroden überdeckende Isolationsschicht als Fixierschicht für die Distanzelemente dienen.

Eine weitere Ausbildungsmöglichkeit besteht darin, dass die eine Trägerplatte überdeckende Entspiegelungsschicht als Fixierschicht für die Distanzelemente herangezogen wird.

Letztlich ist es auch möglich, dass man eine eine Trägerplatte überdeckende Orientierungsschicht als Fixierschicht benutzt.

Diese Ausbildungen, bei denen bereits vorhandene Schichten als Fixierschicht mitbenutzt werden, bringen den Vorteil mit sich, dass zum einen keine besondere zusätzliche Fixierschicht und zum anderen auch kein besonderer zusätzlicher Arbeitsgang zum Aufbringen dieser Fixierschicht erforderlich ist.

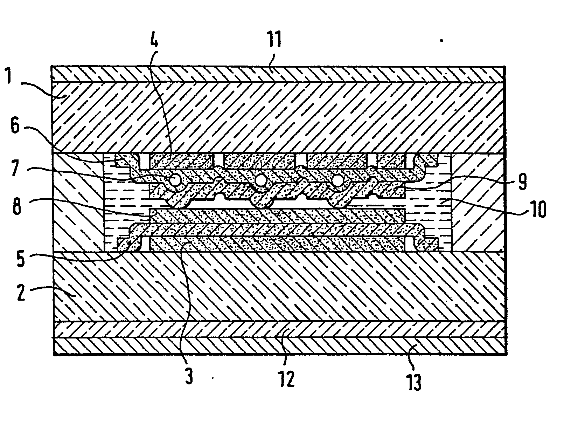

Ein Ausführungsbeispiel der Erfindung ist in der einzigen Figur der Zeichnung dargestellt und wird im folgenden näher beschrieben.

Die in der Figur im Schnitt dargestellte Anzeigevorrichtung ist eine Flüssigkristallanzeige mit zwei im Abstand voneinander angeordneten Trägerplatten 1 und 2, die aus Glas bestehen und zwischen sich eine nach aussen abgeschlossene Zelle bilden.

Auf den sich zugewandten Flächen der Trägerplatten 1 und 2 sind Elektroden angeordnet, wobei die auf der Trägerplatte 2 angeordnete Elektrode 3 einteilig ist, während die auf der Trägerplatte 1 angeordnete Elektrode 4 aus getrennt ansteuerbaren, Zeichen bildenden Elektrodensegmenten besteht.

Beide Elektroden 3 und 4 sind von einer Isolationsschicht überzogen, wobei die auf der Elektrode 3 angeordnete Isolationsschicht 5 keine Distanzelemente besitzt.

In der auf der Elektrode 4 angeordneten Isolationsschicht 6 sind Distanzelemente 7 enthalten, die dafür sorgen, dass die beiden Trägerplatten 1 und 2 über ihre gesamte Fläche auf gleichem Abstand zueinander gehalten sind.

Die Distanzelemente 7, die aus schwarzen lichtabsorbierenden Glaskugeln bestehen, sind in einem Abstand zueinander angeordnet, der grösser ist als ihr Durchmesser.

Die Isolationsschichten 5 und 6 sind von Orientierungsschichten 8 und 9 überzogen, während der durch die Trägerplatten 1 und 2 gebildete Zellenraum von einer Flüssigkristallsubstanz 10 gefüllt ist.

Weiterhin sind auf den Aussenseiten der Trägerplatten 1 und 2 Polarisatoren 11 und 12 angeordnet, wobei der Polarisator 12 noch einen Reflektor 13 trägt.

Die Polarisatoren 11 und 12 sind so ausgerichtet, dass ein Beobachter bei nicht angesteuerten Elektroden 3 und 4 ein dunkles Anzeigefeld und bei angesteuerten Elektroden 3 und 4 entsprechend der Konfiguration der angesteuerten Elektrodensegmente der Elektrode 4 helle Zeichen in ansonsten dunklem Umfeld sieht.

Die Distanzelemente 7 können ausser der Kugelform auch jede andere geeignete Form besitzen. So hat sich herausgestellt, dass stäbchenförmige Distanzelemente gut verarbeitbar und damit besonders vorteilhaft beim Gegenstand der Erfindung anwendbar sind.

**Patentansprüche**

1. Anzeigevorrichtung zur Darstellung heller Zeichen in dunklem Umfeld, insbesondere Flüssigkristallanzeige, mit einem zwischen zwei optisch verschiedenen Zuständen schaltbaren Medium zwischen zwei parallelen Trägerplatten, wobei wenigstens eine Trägerplatte ein ein Zeichen bildendes Elektrodensegment trägt, mit einer auf einer der einander zugewandten Trägerplattenflächen aufgebrachten, diese Trägerplattenfläche vollständig überziehenden Fixierschicht, die Distanzelemente beinhaltet, durch die die Trägerplatten in einem bestimmten Abstand voneinander gehalten sind und mit je einem jeder Trägerplatte zugeordneten Polarisator, dadurch gekennzeichnet, dass die Distanzelemente (7) im Bereich des Zeichens aus dunklem Glas bestehen.

2. Anzeigevorrichtung nach Anspruch 1, dadurch gekennzeichnet, dass die Distanzelemente (7) einen grösseren Abstand voneinander aufweisen als ihr Durchmesser beträgt.

3. Anzeigevorrichtung nach Anspruch 2, dadurch gekennzeichnet, dass die Distanzelemente (7) einen Durchmesser < 100 µm besitzen und mit einer Verteilung von weniger oder gleich ein bis zwei Distanzelementen (7) pro Quadratmillimeter auf der Trägerplatte (1) angeordnet sind.

4. Anzeigevorrichtung nach einem der vorhergehenden Ansprüche, dadurch gekennzeichnet, dass die Distanzelemente (7) kugelförmig sind.

5. Anzeigevorrichtung nach einem der vorhergehenden Ansprüche mit einer die eine Trägerplatte vollständig abdeckenden Flächenelektrode, dadurch gekennzeichnet, dass die Flächenelektrode als Fixierschicht für die Distanzelemente dient.

6. Anzeigevorrichtung nach einem der Ansprüche 1–4 mit auf jeder Trägerplatte angeordneten Elektroden und einer die Elektroden und Trägerplatten vollständig überdeckenden Isolationsschicht, dadurch gekennzeichnet, dass die Isolationsschicht (6) als Fixierschicht für die Distanzelemente (7) dient.

7. Anzeigevorrichtung nach einem der Ansprüche 1–4 mit einer eine Trägerplatte vollständig überdeckenden Entspiegelungsschicht, dadurch gekennzeichnet, dass die Entspiegelungsschicht als Fixierschicht für die Distanzelemente dient.

8. Anzeigevorrichtung nach einem der Ansprüche 1–4 mit einer eine Trägerplatte vollständig überdeckenden Orientierungsschicht, dadurch gekennzeichnet, dass die Orientierungsschicht als Fixierschicht für die Distanzelemente dient.

**Claims**

1. Display device for the representation of light characters on a dark surrounding field, especially a liquid crystal display, with a medium situated between two parallel support plates and switchable between two optically differing states, at least one support plate carrying an electrode segment forming a character, with a fixing layer which is applied to one of the mutually facing support plate surfaces and which completely covers this supporting plate surface and which includes spacer elements whereby the supporting plates are held at a specific spacing from one another, and with a polariser associated with each support plate, characterised in that the spacer elements (7) in the character region are made of dark glass.

2. Display device according to claim 1, characterised in that the spacer elements (7) are situated at a greater distance from each other than the amount of their diameter.

3. Display device according to claim 2, characterised in that the spacer elements (7) have a diameter of < 100 µm, and are arranged with a distribution of less than or equal to one to two spacer elements (7) per square millimetre on the support plate (1).

4. Display device according to one of the preceding claims, characterised in that the spacer elements (7) are of spherical form.

5. Display device according to one of the preceding claims with a sheet electrode completely covering one support plate, characterised in that the sheet electrode serves as a fixing layer for the spacer elements.

6. Display device according to one of claims 1–4, with electrodes arranged on each support plate and with an insulating layer completely covering the electrodes and support plates, characterised in that the insulating layer (6) serves as fixing layer for the spacer elements (7).

7. Display device according to one of claims 1–4, with a dereflecting layer completely covering one support plate, characterised in that the dereflecting layer serves as fixing layer for the spacer elements.

8. Display device according to one of claims 1–4 with an orientation layer completely covering one support plate, characterised in that the orientation layer serves as fixing layer for the spacer elements.

**Revendications**

1. Dispositif d'affichage permettant la représentation de symboles clairs sur un fond environnant foncé, en particulier un dispositif d'affichage à cristaux liquides comprenant un agent emprisonné entre deux plaquettes de support parallèles et pouvant accuser une variation entre deux états optiquement différents, au moins l'une des plaquettes de support portant un segment d'électrode formant un symbole; une couche de fixation qui est déposée sur l'une des faces des plaquettes de support tournées l'une vers l'autre, qui recouvre intégralement cette face de plaquette de support et renferme des éléments d'espacement par l'intermédiaire desquels les plaquettes de support sont maintenues espacées l'une de l'autre d'une distance déterminée; ainsi qu'un polariseur respectif associé à chaque plaquette de support, dispositif caractérisé par le fait que les éléments d'espacement (7) consistent en un verre foncé au voisinage du symbole.

2. Dispositif d'affichage selon la revendication 1, caractérisé par le fait que les éléments d'espacement (7) sont distants les uns des autres d'un intervalle plus grand que leur diamètre.

3. Dispositif d'affichage selon la revendication 2, caractérisé par le fait que les éléments d'affichage (7) possèdent un diamètre < 100 μm et son agencés, sur la plaquette de support (1), selon une répartition inférieure ou égale à un à deux éléments d'espacement (7) par millimètre carré.

4. Dispositif d'affichage selon l'une des revendications précédentes, caractérisé par le fait que les éléments d'espacement (7) sont de configuration sphérique.

5. Dispositif d'affichage selon l'une des revendications précédentes, comportant une électrode superficielle qui recouvre intégralement l'une des plaquettes de support, dispositif caractérisé par le fait que l'électrode superficielle sert de couche de fixation des éléments d'espacement.

6. Dispositif d'affichage selon l'une des revendications 1 à 4, comprenant des électrodes placées sur chaque plaquette de support et une couche d'isolation qui recouvre intégralement lesdites électrodes et lesdites plaquettes de support, dispositif caractérisé par le fait que la couche d'isolation (6) sert de couche de fixation des éléments d'espacement (7).

7. Dispositif d'affichage selon l'une des revendications 1 à 4, comportant une couche anti-réverbération qui recouvre intégralement une plaquette de support, dispositif caractérisé par le fait que cette couche anti-réverbération sert de couche de fixation des éléments d'espacement.

8. Dispositif d'affichage selon l'une des revendications 1 à 4, présentant une couche d'orientation qui recouvre intégralement une plaquette de support, dispositif caractérisé par le fait que cette couche d'orientation sert de couche de fixation des éléments d'espacement.